(19) Europäisches Patentamt
European Patent Office
Office européen des brevets

(11) EP 3 561 011 A1

(12) EUROPEAN PATENT APPLICATION
published in accordance with Art. 153(4) EPC

(43) Date of publication:
30.10.2019 Bulletin 2019/44

(51) Int Cl.:
C09J 7/20 (2018.01)     B32B 27/00 (2006.01)
B32B 27/18 (2006.01)     B32B 27/30 (2006.01)
B64D 11/00 (2006.01)     C09J 11/02 (2006.01)
C09J 133/00 (2006.01)     C09J 201/00 (2006.01)

(21) Application number: 17882793.7

(22) Date of filing: 22.12.2017

(86) International application number:
PCT/JP2017/046235

(87) International publication number:
WO 2018/117264 (28.06.2018 Gazette 2018/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 22.12.2016 JP 2016249966

(71) Applicant: Mitsubishi Chemical Corporation
Tokyo 100-8251 (JP)

(72) Inventors:
• KAWAZOE, Yuta
  Tokyo 100-8251 (JP)
• SAKAI, Junichiro
  Tokyo 100-8251 (JP)
• GESHI, Makoto
  Tokyo 100-8251 (JP)

(74) Representative: Kuhnen & Wacker
Patent- und Rechtsanwaltsbüro PartG mbB
Prinz-Ludwig-Straße 40A
85354 Freising (DE)

(54) DOUBLE-SIDED ADHESIVE TAPE

(57) The present invention relates to a double-sided pressure-sensitive adhesive tape excellent in good balance of both flame retardance and pressure-sensitive adhesive properties, comprising a layer structure of a pressure-sensitive adhesive layer (I), a substrate, and a pressure-sensitive adhesive layer (II) in this order, in which a proportion (Y/X) of a thickness (X) of the pressure-sensitive adhesive layer (I) and a thickness (Y) of the pressure-sensitive adhesive layer (II) is more than 1.00 and less than 2.00.

EP 3 561 011 A1

**Description**

Technical Field

The present invention relates to a double-sided pressure-sensitive adhesive tape. More particularly, the invention relates to a double-sided pressure-sensitive adhesive tape suitable for use in fixing aircraft parts therewith.

Background Art

Conventionally, double-sided pressure-sensitive adhesive tapes are used for fixing parts in the fields of electrical, electronic, OA appliances, home electrical appliances, aircrafts, ships, vehicles, etc.

As a result of the remarkable progress of investigations and applications of electronics and of semiconductor and magnetic-body technology in recent years, the high integrations, size reductions, and performance advancements in electrical, electronic, and OA appliances, etc. have been proceeding, and the risk of firing due to the elevated temperature and heat accumulation inside such appliances is increasing. From the necessity of preventing such risk, the various components within the appliances and the parts used for bonding the components have come to be required to have a high level of flame retardance.

Meanwhile, also in the fields of aircrafts, home electrical appliances, and the like, various investigations are being enthusiastically made on the flame-proofing of plastic materials, and adhesive materials to be used for fixing these materials have, of course, come to be required to have high flame retardance.

As a double-sided pressure-sensitive adhesive tape having flame retardance, for example, in Patent Document 1, there is proposed a flame-retardant double-sided pressure-sensitive adhesive tape which comprises: a substrate sheet in which a substrate sheet constituted of a nonwoven polyester fabric having a basis weight of 15 to 80 $g/m^2$ is impregnated with a composition for impregnation which contains a pressure-sensitive adhesive and a nitrogen-containing organic flame retardant and which further contains a flame retardant that does not contain any of halogens, antimony, and phosphorus; and pressure-sensitive adhesive layers provided on both sides of the substrate sheet respectively, the pressure-sensitive adhesive layers being constituted of a flame-retardant pressure-sensitive adhesive composition in which 20 to 200 parts by mass of a flame retardant that contains a nitrogen-containing organic flame retardant but does not contain any of halogens, antimony, and phosphorus is added to 100 parts by mass of an acrylic pressure-sensitive adhesive.

Prior-Art Document

Patent Document

Patent Document 1: JP-A-2004-217833

Summary of the Invention

Problem that the Invention is to Solve

However, according to the study of the present inventors, although the double-sided pressure-sensitive adhesive tape disclosed in Patent Document 1 achieved flame retardance, it is not sufficient for pressure-sensitive adhesive properties, and further improvement is required.

Then, the invention was made in view of the above conventional circumstances, and an object of the invention is to provide a double-sided pressure-sensitive adhesive tape which is excellent in good balance of both flame retardance and pressure-sensitive adhesive properties.

Means for Solving the Problems

The present inventors diligently made investigations under such circumstances. As a result, the inventors have discovered that a double-sided pressure-sensitive adhesive tape which is excellent in good balance of both flame retardance and pressure-sensitive adhesive properties is obtained by making the thicknesses of pressure-sensitive adhesive layers different and setting the proportion of the thicknesses of both the pressure-sensitive adhesive layers to a specific range in the double-sided pressure-sensitive adhesive tape. The invention has been thus completed.

That is, the present invention relates to the following <1> to <9>.

<1> A double-sided pressure-sensitive adhesive tape, comprising a layer structure of a pressure-sensitive adhesive layer (I), a substrate, and a pressure-sensitive adhesive layer (II) in this order,
wherein a proportion (Y/X) of a thickness (X) of the pressure-sensitive adhesive layer (I) and a thickness (Y) of the pressure-sensitive adhesive layer (II) is more than 1.00 and less than 2.00.

<2> The double-sided pressure-sensitive adhesive tape according to <1>,
wherein the pressure-sensitive adhesive layer (I) and the pressure-sensitive adhesive layer (II) are constituted of a pressure-sensitive adhesive composition containing an acrylic resin (A).

<3> The double-sided pressure-sensitive adhesive tape according to <2>,
wherein the pressure-sensitive adhesive composition further contains a crosslinker (B).

<4> The double-sided pressure-sensitive adhesive tape according to any one of <1> to <3>,
wherein at least one of the pressure-sensitive adhesive layer (I) and the pressure-sensitive adhesive layer (II) contains a flame retardant (C).

<5> The double-sided pressure-sensitive adhesive tape according to <4>,
wherein 90% or more of a total mass of the flame retardant (C) is contained in the pressure-sensitive adhesive layer (II).

<6> The double-sided pressure-sensitive adhesive tape according to <4> or <5>,
wherein the flame retardant (C) is contained only in the pressure-sensitive adhesive layer (II).

<7> The double-sided pressure-sensitive adhesive tape according to any one of <4> to <6>,
wherein the flame retardant (C) is a halogen-free flame retardant.

<8> The double-sided pressure-sensitive adhesive tape according to any one of <1> to <7>,
wherein the substrate is a substrate containing a flat yarn cloth.

<9> The double-sided pressure-sensitive adhesive tape according to any one of <1> to <8>, which is used for fixing aircraft parts.

Effects of the Invention

According to the present invention, a double-sided pressure-sensitive adhesive tape which is excellent in good balance of both flame retardance and pressure-sensitive adhesive properties can be provided, and the double-sided pressure-sensitive adhesive tape can be suitably used for use in fixing aircraft parts, fixing of mirrors or guide signs, or the like.

Modes for Carrying Out the Invention

Hereinafter, the present invention will be explained below in detail, but the following explanations merely indicate exemplary examples of desirable embodiments, and the present invention is not limited to these contents.

In the present description, "mass" is synonymous with "weight".

The present invention is characteristic in a double-sided pressure-sensitive adhesive tape comprising a pressure-sensitive adhesive layer (I), a substrate, and a pressure-sensitive adhesive layer (II) in this order, wherein the proportion (Y/X) of the thickness (X) of the pressure-sensitive adhesive layer (I) and the thickness (Y) of the pressure-sensitive adhesive layer (II) is more than 1.00 and less than 2.00.

(Substrate)

Examples of the substrate of the present invention include rayon fabrics, cotton fabrics, polyester fabrics, fabrics comprising rayon/polyester blended yarns, nonwoven fabrics, flat yarn cloths, and laminated films in which plastic films are laminated to flat yarn cloths. Of these, those comprising flat yarn cloths are preferable in terms of high tensile strength in the longitudinal direction.

A flat yarn cloth is a woven fabric produced by weaving flat yarns obtained by cutting a polyethylene or polypropylene film into strips and stretching the strips to impart strength thereto, which is called "flat yarn". Such woven fabrics to be used are ones in which the warp flat yarns and the weft flat yarns have been fixed to each other by thermal fusion bonding at the cross-points thereof so as to prevent yarn misalignment.

A substrate reinforced by fibers which are not woven materials such as flat yarn cloths have an exceedingly low tensile strength as compared with woven cloths. For compensating the exceeding low tensile strength, by laminating a biaxially stretched polyester film or biaxially stretched polypropylene film to such a substrate by using an adhesive, the tensile strength of the substrate is improved. However, it becomes difficult to tear along the width direction. In addition, the necessity of an adhesive for bonding the warp yarns to the weft yarns tends to result in an increase in the weight of the substrate.

Meanwhile, in the cases when the double-sided pressure-sensitive adhesive tape of the present invention is used as a double-sided pressure-sensitive adhesive tape for fixing aircraft parts, it is preferable that the weight per unit area of the double-sided pressure-sensitive adhesive tape is 400 g/m$^2$ or less and it is preferable that the substrate is also lightweight. Specifically, the weight per unit area of the substrate is preferably 200 g/m$^2$ or less, and more preferably 100 g/m$^2$ or less. When the weight per unit area of the substrate is 200 g/m$^2$ or less, flame retardance tends to be enhanced.

The lower limit of the weight per unit area of the substrate is usually 10 g/m$^2$.

Furthermore, among the substrates containing flat yarn cloths, it is preferred to use a substrate in which a flat yarn cloth and a plastic film are laminated, from the standpoint that stable pressure-sensitive adhesive strength and detachability are obtained therewith.

This is thought to be because the substrate prevents the pressure-sensitive adhesive present on one side of the plastic film from passing through the substrate and mixing with the pressure-sensitive adhesive present on the other side, and inhibits additives, such as a crosslinker, flame retardant, and plasticizer, in the pressure-sensitive adhesive layer present on one side of the plastic film from moving to the pressure-sensitive adhesive layer on the other side. In addition, the laminating of a flat yarn cloth and a plastic film brings about an improvement in hand tearability probably because breaking points are smoothly propagated, resulting in an improvement in the linearity of the torn surfaces.

It is preferable that the substrate in which a flat yarn cloth and a plastic film are laminated is also lightweight. It is preferable that the plastic film is a thin film, and the thickness of the plastic film is preferably 10 to 80 μm.

The plastic film may be laminated to only one surface of the flat yarn cloth or may be laminated to both surfaces thereof. Preferred as a method for laminating the film to the flat yarn cloth is extrusion laminating, from the standpoints that no adhesive is used and that a reduction in weight is possible.

The thickness of the substrate containing the flat yarn cloth is preferably 10 μm to 200 μm, more preferably 50 μm to 170 μm, and further preferably 60 μm to 150 μm.

In the case where the thickness thereof is too thin, the occurrence of defects such as the generation of wrinkles during the production of the double-sided pressure-sensitive adhesive tape tends to increase, although the hand tearability of the double-sided pressure-sensitive adhesive tape improves. In the case where the thickness thereof is too thick, tearing the substrate tends to require higher force, resulting in a decrease in hand tearability, although the occurrence of defects during the production of the double-sided pressure-sensitive adhesive tape is reduced.

(Pressure-sensitive Adhesive Layer)

The double-sided pressure-sensitive adhesive tape of the present invention is configured by arranging pressure-sensitive adhesive layers on both sides of a substrate. The pressure-sensitive adhesive layers in the invention are layers obtained by curing a pressure-sensitive adhesive composition including any of various resins.

Examples of such resins serving as the base of the pressure-sensitive adhesive composition include acrylic resins, natural rubber, synthetic rubbers such as isoprene rubbers, styrene/butadiene copolymer rubbers (SBR), butadiene rubbers, isobutylene/isoprene rubbers, acrylic rubbers, acrylonitrile/butadiene copolymer rubbers, styrene/isoprene block copolymer rubbers (SIS), styrene/butadiene block copolymer rubbers (SBS), chloroprene rubbers, and butyl rubbers, and regenerated rubbers.

The pressure-sensitive adhesive composition preferably contains acrylic resin (A) from the standpoints that the resins are excellent in terms of weather resistance, removability, and heat resistance and that it is relatively easy to adjust the pressure-sensitive adhesive properties thereof.

In the description, "(meth)acrylic" means acrylic or methacrylic, "(meth)acryloyl" means acryloyl or methacryloyl, and "(meth)acrylate" means acrylate or methacrylate. Furthermore, "acrylic resin" means a resin obtained by polymerizing a monomer component including at least one kind of (meth)acrylic monomer.

The acrylic resin (A) includes a (meth)acrylic acid alkyl ester monomer (a1) as a polymerization component and is obtained by polymerization, and is preferably a resin obtained by copolymerizing the (meth)acrylic acid alkyl ester monomer (a1) as a main copolymerization component and a functional-group-containing monomer (a2) and optionally other copolymerizable monomer (a3) according to need as copolymerization components.

As the (meth)acrylic acid alkyl ester monomer (a1), the number of carbon atoms of the alkyl group is usually 1 to 20, preferably 1 to 12, more preferably 1 to 8, further more preferably 4 to 8. Specific examples thereof include methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, iso-octyl acrylate, iso-decyl (meth)acrylate, lauryl (meth)acrylate, cetyl (meth)acrylate, stearyl (meth)acrylate, and iso-stearyl acrylate. These may be used alone or in combination of two or more thereof.

Among these, n-butyl (meth)acrylate and 2-ethylhexyl (meth)acrylate are preferred, from the standpoints of copolymerizability, pressure-sensitive adhesive property, handleability, and starting-material availability.

The content of the (meth)acrylic acid alkyl ester monomer (a1) in the copolymerization components is preferably 10 mass% to 100 mass%, more preferably 50 mass% to 95 mass%, further more preferably 70 mass% to 95 mass%. In the case where the content of the (meth)acrylic acid alkyl ester monomer (a1) is too low, the resultant acrylic resin, when used as a pressure-sensitive adhesive, tends to have reduced pressure-sensitive adhesive strength.

Examples of the functional-group-containing monomer (a2) include hydroxyl-group-containing monomers, carboxyl-group-containing monomers, amino-group-containing monomers, acetoacetyl-group-containing monomers, isocyanate-group-containing monomers, and glycidyl-group-containing monomers. Preferred of these are hydroxyl-group-containing monomers and carboxyl-group-containing monomers, from the standpoint that use of these monomers enables a crosslinking reaction to be conducted efficiently.

Examples of the hydroxyl-group-containing monomers include: acrylic acid hydroxyalkyl esters, such as 2-hydroxyethyl (meth)acrylate, 4-hydroxybutyl (meth)acrylate, 5-hydroxypentyl (meth)acrylate, 6-hydroxyhexyl (meth)acrylate, and 8-hydroxyoctyl (meth)acrylate; caprolactone-modified monomers such as caprolactone-modified 2-hydroxyethyl (meth)acrylates; oxyalkylene-modified monomers such as diethylene glycol (meth)acrylate and polyethylene glycol (meth)acrylate; monomers containing a primary hydroxyl group, such as 2-acryloyloxyethyl-2-hydroxyethylphthalic acid; monomers containing a secondary hydroxyl group, such as 2-hydroxypropyl (meth)acrylate, 2-hydroxybutyl (meth)acrylate, and 3-chloro-2-hydroxypropyl (meth)acrylate; and monomers containing a tertiary hydroxyl group, such as 2,2-dimethyl-2-hydroxyethyl (meth)acrylate.

Especially preferred of these are 2-hydroxyethyl (meth)acrylate and 4-hydroxybutyl (meth)acrylate, from the standpoint of excellent reactivity with crosslinkers.

Examples of the carboxyl-group-containing monomers include (meth)acrylic acid, acrylic acid dimer, crotonic acid, maleic acid, maleic anhydride, fumaric acid, citraconic acid, glutaconic acid, itaconic acid, acrylamido-N-glycolic acid, and cinnamic acid. Preferred of these is (meth)acrylic acid.

Examples of the amino-group-containing monomers include tert-butylaminoethyl (meth)acrylate, ethylaminoethyl (meth)acrylate, dimethylaminoethyl (meth)acrylate, and diethylaminoethyl (meth)acrylate.

Examples of the acetoacetyl-group-containing monomers include 2-(acetoacetoxy)ethyl (meth)acrylate and allyl acetoacetate.

Examples of the isocyanate-group-containing monomers include 2-acryloyloxyethyl isocyanate, 2-methacryloyloxyethyl isocyanate, and alkylene oxide adducts of these.

Examples of the glycidyl-group-containing monomers include glycidyl (meth)acrylate and allylglycidyl (meth)acrylate.

These functional-group-containing monomers (a2) may be used alone or in combination of two or more thereof.

The content of the functional-group-containing monomer (a2) in the copolymerization components is preferably 0.01 mass% to 30 mass%, more preferably 0.05 mass% to 10 mass%, further more preferably 0.1 mass% to 10 mass%, even more preferably 2 mass% to 5 mass%. In the case where the content of the functional-group-containing monomer (a2) is too low, the resultant acrylic resin tends to have reduced cohesive force and hence reduced durability. In the case where the content thereof is too high, there is a tendency that a viscosity becomes high and the stability of the resin is reduced.

Examples of the other copolymerizable monomer (a3) include: (meth)acrylate compounds containing an alicyclic structure, such as cyclohexyl (meth)acrylate and isobornyl (meth)acrylate; monomers containing one aromatic ring, such as phenyl (meth)acrylate, benzyl (meth)acrylate, phenoxyethyl (meth)acrylate, phenyldiethylene glycol (meth)acrylate, 2-hydroxy-3-phenoxypropyl (meth)acrylate, styrene, and $\alpha$-methylstyrene; (meth)acrylic acid ester monomers containing a biphenyloxy structure, such as biphenyloxyethyl (meth)acrylate; (meth)acrylamide monomers such as ethoxymethyl(meth)acrylamide, n-butoxymethyl(meth)acrylamide, (meth)acryloylmorpholine, dimethyl(meth)acrylamide, diethyl(meth)acrylamide, and (meth)acrylamido-N-methylol(meth)acrylamide; monomers containing an alkoxy group or oxyalkylene group, such as 2-methoxyethyl (meth)acrylate, 2-ethoxyethyl (meth)acrylate, methoxydiethylene glycol (meth)acrylate, ethoxydiethylene glycol (meth)acrylate, methoxypolyethylene glycol (meth)acrylate, and polypropylene glycol mono(meth)acrylate; and acrylonitrile, methacrylonitrile, vinyl acetate, vinyl propionate, vinyl stearate, vinyl chloride, vinylidene chloride, alkyl vinyl ethers, vinyltoluene, vinylpyridine, vinylpyrrolidone, itaconic acid dialkyl esters, fumaric acid dialkyl esters, allyl alcohol, acrylic chloride, methyl vinyl ketone, allyltrimethylammonium chloride, and dimethylallyl vinyl ketone.

Preferred of these are (meth)acrylate compounds containing an alicyclic structure, from the standpoint of excellent pressure-sensitive adhesive strength to low polar adherends.

The content of the other copolymerizable monomer (a3) in the copolymerization components is preferably 40 mass% or less, more preferably 30 mass% or less, further more preferably 25 mass% or less. In the case where the content of the other copolymerizable monomer (a3) is too high, there is a tendency that the desired pressure-sensitive adhesive properties are difficult to obtain.

In this manner, by copolymerizing the (meth)acrylic acid alkyl ester monomer (a1), the functional-group-containing monomer (a2) and the other copolymerizable monomer (a3) according to need, as copolymerization components, an acrylic resin (A) is produced. It is preferable that this copolymerization is solution polymerization, from the standpoint that the acrylic resin (A) can be safely and stably produced using any desired monomer composition.

For example, this solution polymerization may be performed by mixing or dropping monomer components including the (meth)acrylic acid alkyl ester monomer (a1), functional-group-containing monomer (a2), and other copolymerizable monomer (a3) and a polymerization initiator with or into an organic solvent and polymerizing the monomer components under a refluxing condition or at 50°C to 98°C for 0.1 hours to 20 hours.

Examples of the polymerization initiator include ordinary radical polymerization initiators such as azo type polymerization initiators, e.g., azobisisobutyronitrile and azobisdimethylvaleronitrile, and peroxide type polymerization initiators, e.g., benzoyl peroxide, lauroyl peroxide, di-tert-butyl peroxide, and cumene hydroperoxide.

The weight-average molecular weight of the acrylic resin (A) is usually 100,000 to 5,000,000, preferably 300,000 to 1,500,000, more preferably 500,000 to 900,000. Too low weight-average molecular weights thereof tend to result in a decrease in durability, while too high weight-average molecular weights thereof tend to render the production difficult.

The dispersity [(weight-average molecular weight)/(number-average molecular weight)] of the acrylic resin (A) is preferably 20 or less, more preferably 15 or less, even more preferably 10 or less, particularly more preferably 7 or less. In the case where the dispersity thereof is too high, the durability of pressure-sensitive adhesive layers tends to reduce and bubbles or the like are prone to occur. A lower limit of the dispersity is usually 1.1 from the standpoint of limitations in production.

A glass transition temperature of the acrylic resin (A) is usually -80°C to 10°C, preferably -70°C to -10°C, more preferably -65°C to -20°C. Too high glass transition temperatures thereof tend to result in insufficient tackiness, while too low glass transition temperatures thereof tend to result in a decrease in heat resistance.

The weight-average molecular weight is a weight-average molecular weight obtained from standard polystyrene molecular weight conversion, which is determined through a measurement with high-performance liquid chromatography ("Waters 2695 (apparatus main body)" and "Waters 2414 (detector)", both manufactured by Nihon Waters K.K.) in which three columns, column: Shodex GPC KF-806L (exclusion limit molecular weight: $2 \times 10^7$; separation range: 100 to $2 \times 10^7$; number of theoretical plates: 10,000 per column; material of column packing: styrene/divinylbenzene copolymer; particle diameter of the column packing: 10 $\mu$m) are used in a serially connected state. For the number-average molecular weight, the same method can be used. The dispersity is determined from the weight-average molecular weight and the number-average molecular weight. The glass transition temperature is calculated from the following Fox equation.

In addition, the glass transition temperature when the monomer constituting the acrylic resin (A) is a homopolymer is normally measured by a differential scanning calorimeter (DSC).

[Math. 1]

$$\frac{1}{Tg} = \frac{Wa}{Tga} + \frac{Wb}{Tgb} + \cdots + \frac{Wn}{Tgn}$$

Tg: glass transition temperature (K) of the copolymer
Tga: glass transition temperature (K) of homopolymer of monomer A
Wa: weight fraction of monomer A
Tgb: glass transition temperature (K) of homopolymer of monomer B
Wb: weight fraction of monomer B
Tgn: glass transition temperature (K) of homopolymer of monomer N
Wn: weight fraction of monomer N
(Wa+Wb+ ⋯ +Wn=1)

It is preferable that the pressure-sensitive adhesive composition further contains a crosslinker (B), and is crosslinked with the crosslinker (B) and cured to be pressure-sensitive adhesive layers.

Examples of the crosslinker (B) include isocyanate-based crosslinkers, metal chelate-based crosslinkers, epoxy-based crosslinkers, metal salt-based crosslinkers, metal alkoxide-based crosslinkers, aldehyde-based crosslinkers, amino-based crosslinkers which are not amino resins, urea-based crosslinkers, melamine-based crosslinkers, and aziridine-based crosslinkers. Preferred examples among these include isocyanate-based crosslinkers and epoxy-based crosslinkers.

The content of the crosslinker (B) is preferably 0.01 to 10 parts by mass, more preferably 0.01 to 5 parts by mass, per 100 parts by mass of the acrylic resin (A). In the case where the content thereof is too small, the pressure-sensitive adhesive layers tend to have reduced cohesive force and be susceptible to shearing. In the case where the content thereof is too large, the crosslinking reaction tends to proceed excessively, resulting in a decrease in pressure-sensitive adhesive strength.

In particular, in the case where the crosslinker (B) is an isocyanate-based crosslinker, the content thereof per 100 parts by mass of the acrylic resin (A) is preferably 0.1 to 10 parts by mass, more preferably 0.2 to 5 parts by mass.

In the case where the crosslinker (B) is an epoxy-based crosslinker, the content thereof per 100 parts by mass of the acrylic resin (A) is preferably 0.01 to 1 parts by mass, more preferably 0.01 to 0.5 parts by mass.

The pressure-sensitive adhesive layers may contain a tackifier, ultraviolet absorber, antioxidant, plasticizer, pigment, stabilizer, filler, etc., besides the base resin, e.g., the acrylic resin (A), and the crosslinker (B).

Examples of the tackifier include rosin-based resins, terpene-based resins, xylene-based resins, phenolic resins, coumarone-based resins, and petroleum resins.

In the case where the base resin is the acrylic resin (A), preferred tackifiers are rosin-based resins, terpene-based resins, and xylene-based resins. In the case where the base resin is a rubber-based resin, preferred tackifiers are rosin-based resins, terpene-based resins, and petroleum-based resins.

(Flame retardant C))

In the present invention, at least one of the pressure-sensitive adhesive layer (I) and the pressure-sensitive adhesive layer (II) preferably contains a flame retardant (C).

The flame retardant (C) to be used in the invention may be any of known flame retardants generally used as the flame retardant for pressure-sensitive adhesives. Examples thereof include phosphorous-based flame retardants, metal hydroxyl-based flame retardants, metal phosphinate-based flame retardants, halogen-based flame retardants, combinations of a halogen-based flame retardant and antimony trioxide, nitrogen-containing compounds such as melamine cyanurate and triazine compounds, and poly sodium phosphate.

Examples of the phosphorus-based flame retardants include: halogen-free phosphoric esters such as trimethyl phosphate, triethyl phosphate, triphenyl phosphate, tricresyl phosphate, trixylenyl phosphate, cresyl diphenyl phosphate, 2-naphthyl diphenyl phosphate, and cresyl di-2,6-xylenyl phosphate; aromatic condensed phosphate esters such as trade names "CR-733S", "CR-741", and "PX-200", manufactured by Daihachi Chemical Industry Co., Ltd.; and halogen-free condensed phosphate esters such as trade names "DAIGUARD-580", "DAIGUARD-610", and "DAIGUARD-880", manufactured by Daihachi Chemical Industry Co., Ltd.; phosphate amine salts such as melamine polyphosphate; and ammonium polyphosphate which is not coated with a resin or which is coated with melamine or the like.

Preferred of these are ammonium polyphosphate from the standpoints that the flame retardance is high because although halogen is not contained, phosphorus concentration is high and that flame retardance can be imparted without decreasing the adhesive property by adding a small amount, and especially preferred of these are ammonium polyphosphate coated with melamine or the like from the standpoints that hydrolysis is suppressed and moisture resistance is excellent.

Examples of the metal hydroxyl-based flame retardants include magnesium hydroxide and aluminum hydroxide.

Examples of the metal phosphinate-based flame retardants include trade names "Exolit OP1230" and "Exolit OP930", manufactured by Clariant AG.

Examples of the halogen-based flame retardant include bromine-based flame retardants such as tetrabromobisphenol A, hexabromocyclodecane, dibromodiphenyl oxide, tetrabromobisphenol A polycarbonate oligomer, brominated polystyrene and ethylene bis-tetrabromophthalimide; chlorinated flame retardants such as chlorinated paraffin and perchlorocyclopentadecane; halogen-containing phosphoric acid esters such as tris (tribromoneopentyl) phosphate and tris (chloropropyl) phosphate; and halogen-containing condensed phosphoric acid esters such as trade names "CR-504L", "CR-570", and "DAIGUARD-540", manufactured by Daihachi Chemical Industry Co., Ltd.

Of these, the flame retardant (C) is preferably a halogen-free flame retardant because halogen-containing flame retardants generate toxic halogen gas upon combustion or corrode metals.

Further, for the flame retardant (C), for example, for a compound product (a composite or a composite material), a synergistic effect is obtained by using, in combination, flame retardants which function by different mechanisms, rather than using one flame retardant alone. In the invention, it is preferable to use the flame retardant independently from the standpoint of not decreasing the pressure-sensitive adhesive strength and the compatibility with the pressure-sensitive adhesive.

Especially, preferred is the phosphorus-based flame retardant exemplified above, and especially preferred is ammonium polyphosphate coated with melamine or the like from the standpoints of obtaining excellent flame retardance with little decrease in pressure-sensitive adhesive properties and suppressing hydrolysis and excellent heat and moisture resistance.

The content of the flame retardant (C) is preferably 10 parts by mass or less, more preferably 0.1 to 10 parts by mass, further more preferably 0.5 to 8 parts by mass, and especially preferably 1 to 5 parts by mass based on 100 parts by mass of the total amount of the resin components in the pressure-sensitive adhesive layers on both sides.

In the case where the content of the flame retardant (C) is more than 10 parts by mass, there is a tendency that the pressure-sensitive adhesive properties of the double-sided pressure-sensitive adhesive tape decrease or the weight of the tape is increased.

In the case where the flame retardant (C) is contained in (CI) parts by mass based on 100 parts by mass of the resin components in the pressure-sensitive adhesive layer (I), and the flame retardant (C) is contained in (CII) parts by mass based on 100 parts by mass of the resin components in the pressure-sensitive adhesive layer (II), the content of the flame retardant (C) is calculated by the following calculating formula (I).

$$\text{The content (parts by mass) of the flame retardant (C)} = \text{CI (parts by mass)} \times$$
$$\{X/(X + Y)\} + \text{CII (parts by mass)} \times \{Y/(X + Y)\} \qquad \text{calculating formula (I)}$$

Here, X represents the thickness of the pressure-sensitive adhesive layer (I), and Y represents the thickness of the pressure-sensitive adhesive layer (II).

In addition, for the flame retardant (C), it is preferable that 90% or more of the total mass of the flame retardant (C) is contained in the pressure-sensitive adhesive layer (II), it is more preferable that 95% or more thereof is contained in the pressure-sensitive adhesive layer (II), and especially preferably, the entire flame retardant (C) is contained only in the pressure-sensitive adhesive layer (II), from the standpoints that the double-sided pressure-sensitive adhesive tape in this configuration is apt to exhibit the flame retardance and that the pressure-sensitive adhesive strength thereof is stably exhibited.

The mass proportion (%) of the flame retardant (C) contained in the pressure-sensitive adhesive layer (II) to the entire mass of the flame retardant (C) is calculated by the following calculating formula (II).

$$\text{The mass proportion (\%) of the flame retardant (C) contained in the pressure-}$$
$$\text{sensitive adhesive layer (II)} = \text{CII (parts by mass)} \times \{Y/(X + Y)/(\text{content (parts by mass) of}$$
$$\text{the flame retardant (C) calculated by the calculating formula (I) above)}\} \times 100$$
$$\text{calculating formula (II)}$$

(The thickness (X) of the pressure-sensitive adhesive layer (I) and the thickness (Y) of the pressure-sensitive adhesive layer (II))

In the present invention, the proportion (Y/X) of the thickness (X) of the pressure-sensitive adhesive layer (I) and the thickness (Y) of the pressure-sensitive adhesive layer (II) is more than 1.00 and less than 2.00. When the thickness proportion (Y/X) of the pressure-sensitive adhesive layers is more than 1.00 and less than 2.00, the double-sided pressure-sensitive adhesive tape of the present invention becomes a double-sided pressure-sensitive adhesive tape which is excellent in good balance of both flame retardance and pressure-sensitive adhesive properties.

When the thickness proportion (Y/X) of the pressure-sensitive adhesive layers is more than 1.00, the tape is likely to be wound up in a specific direction when the flame is contacted, and the flame is prevented from being applied to the tape by moving the tape away from the fire source before the flame is ignited on the tape, as compared to the thickness proportion (Y/X) of the pressure-sensitive adhesive layers is 1.00 (the thickness (X) of the pressure-sensitive adhesive layer (I) and the thickness (Y) of the pressure-sensitive adhesive layer (II) are the same).

When the thickness proportion (Y/X) of the pressure-sensitive adhesive layers is less than 2.00, the adhesive strength of the pressure-sensitive adhesive layer (I) can be brought close to the adhesive strength of the pressure-sensitive adhesive layer (II), and the adhesive strength can be increased on both sides.

The thickness proportion (Y/X) of the pressure-sensitive adhesive layers is preferably 1.05 or more, more preferably 1.10 or more, and also preferably 1.80 or less, more preferably 1.65 or less, and further more preferably 1.35 or less.

The thickness (X) of the pressure-sensitive adhesive layer (I) is preferably from 30 μm to 150 μm, more preferably from 40 μm to 130 μm, further more preferably from 50 μm to 120 μm, and especially preferably from 65 μm to 115 μm, from the standpoint of providing sufficient pressure-sensitive adhesive strength to the adherend.

The thickness (Y) of the pressure-sensitive adhesive layer (II) is preferably 50 μm to 200 μm, more preferably 60 μm to 150 μm, and further more preferably 70 μm to 130 μm, from the standpoints of making thicker than the thickness (X) of the pressure-sensitive adhesive layer (I) in order to increase the flame retardance of the double-sided pressure-sensitive adhesive tape while providing sufficient pressure-sensitive adhesive strength to the adherend.

For example, in the case where a test plate of a SUS-BA plate (bright annealing treated stainless steel plate) which has been heat-dried at 175°C for 1 hour is used as an adherend, the pressure-sensitive adhesive strength of the pressure-sensitive adhesive layer (I) is preferably from 10 to 200 N/25mm, more preferably from 15 to 150 N/25mm, and further more preferably from 20 to 120 N/25mm, from the standpoint of providing sufficient pressure-sensitive adhesive strength to the adherend.

Further, for example, in the case where Carpet (manufactured by Lantal; for AIRCRAFT; material: Wool/Polyamide) is used as an adherend, it is preferably 3 to 100 N/25mm, more preferably 4 to 75 N/25mm, and further more preferably 5 to 50 N/25mm.

The pressure-sensitive adhesive strength is not limited to the above-mentioned pressure-sensitive adhesive strength range because the pressure-sensitive adhesive strength changes depending on the composition (material), surface state (surface roughness), treatment (cleaning) conditions, etc. of the adherend.

For example, in the case where a test plate of a SUS-BA plate (bright annealing treated stainless steel plate) which has been heat-dried at 175°C for 1 hour is used as an adherend, the pressure-sensitive adhesive strength of the pressure-sensitive adhesive layer (II) is preferably from 10 to 200 N/25mm, more preferably from 15 to 150 N/25mm, and further more preferably from 20 to 120 N/25mm, from the standpoint of providing sufficient pressure-sensitive adhesive strength to the adherend.

Further, for example, Carpet (manufactured by Lantal; for AIRCRAFT; material: Wool/Polyamide) is used as an adherend, it is preferably 3 to 100 N/25mm, more preferably 4 to 75 N/25mm, and further more preferably 5 to 50 N/25mm.

The pressure-sensitive adhesive strength is not limited to the above-mentioned pressure-sensitive adhesive strength range because the pressure-sensitive adhesive strength changes depending on the composition (material), surface state (surface roughness), treatment (cleaning) conditions, etc. of the adherend.

In the case where the pressure-sensitive adhesive strength is increased beyond that range above, there is a tendency that the thickness of the pressure-sensitive adhesive layer is increased, resulting in an increase in the weight of the tape. In the case where the pressure-sensitive adhesive strength thereof is too low, there is a tendency that sufficient adhesive strength is not obtained and the fixed member is prone to fall off.

In the description, the pressure-sensitive adhesive strength is measured in accordance with JIS Z0237. Specifically, the pressure-sensitive adhesive strength can be measured by the method described in the Examples which will be given later.

Since the test piece is a double-sided tape, the pressure-sensitive adhesive surface which is not tested can be covered with polyethylene terephthalate film "Lumirror S10 (manufactured by Toray Industries, Inc.)" having a nominal thickness of No. 25, as provided for in JIS C 2318, when making the measurement as in the Examples which will be given later.

(Double-sided Pressure-sensitive Adhesive Tape)

The double-sided pressure-sensitive adhesive tape of the invention is used in various applications such as fixing of members (such as mirrors and carpets) which are required to have flame retardance and strong pressure-sensitive adhesive properties over a medium to a long period including initial period. The double-sided pressure-sensitive adhesive tape is preferably used for fixing aircraft parts.

In the double-sided pressure-sensitive adhesive tape of the invention, the total mass per unit area of the substrate and the pressure-sensitive adhesive layers is preferably 400 g/m$^2$ or less, more preferably 300 g/m$^2$ or less, further more preferably 250 g/m$^2$ or less, and especially preferably 225 g/m$^2$ or less.

A lower limit of the total mass is usually 50 g/m$^2$.

The thickness of the double-sided pressure-sensitive adhesive tape of the invention is preferably 15 $\mu$m to 400 $\mu$m, more preferably 30 $\mu$m to 300 $\mu$m, further more preferably 40 $\mu$m to 250 $\mu$m.

In the case where the thickness thereof is too large, this double-sided pressure-sensitive adhesive tape tends to have a weight which exceeds a weight limit suitable for use in aircrafts. In the case where the thickness thereof is too small, there is a tendency that sufficient flame retardance, pressure-sensitive adhesive properties, and adhesive strength are not obtained.

The proportion of the total thickness of the two pressure-sensitive adhesive layers of the double-sided pressure-sensitive adhesive tape of the invention and the thickness of the substrate thereof ((pressure-sensitive adhesive layers)/substrate) is preferably 0.1 to 50, more preferably 0.2 to 25, further more preferably 0.5 to 15.

In the case where the proportion thereof is too small, the pressure-sensitive adhesive layers are too thin to the substrate and there is hence a tendency that sufficient pressure-sensitive adhesive strength cannot be obtained. In the case where the proportion thereof is too large, the pressure-sensitive adhesive layers are too thick to the substrate and there is hence a tendency of difficulties in production due to, for example, the generation of bubbles in the pressure-sensitive adhesive layers, and of resulting in an increase in cost.

(Method for Producing Double-sided Pressure-sensitive Adhesive Tape)

For producing the double-sided pressure-sensitive adhesive tape of the invention, known or common methods for producing a double-sided pressure-sensitive adhesive tape may be used. For example, the double-sided pressure-sensitive adhesive tape can be produced by: a method in which a pressure-sensitive adhesive is applied to one side of a substrate and dried, after that a release liner is superposed on the surface of the pressure-sensitive adhesive layer thus formed; or a method in which a pressure-sensitive adhesive is applied to one surface of a release liner and dried, after that a substrate is superposed on the surface of the pressure-sensitive adhesive layer thus formed.

Before a pressure-sensitive adhesive layer is coated on a substrate, a known or common surface treatment such as a physical treatment, e.g., corona discharge treatment or plasma treatment, or a chemical treatment, e.g., priming, may be suitably given to the surface of the substrate.

Examples of the release liner include: plastic films made of plastics such as polyolefin-based resins, e.g., polyethylene, polyester-based resins, e.g., polyethylene terephthalate, vinyl acetate-based resins, polyimide-based resins, fluororesins, and cellophane; paper such as kraft paper and Japanese paper; rubber sheets made of natural rubber, butyl rubbers, and the like; foam sheets obtained by foaming polyurethanes, polychloroprene rubbers, etc.; metal foils such as aluminum foils and copper foils; and composites of these. These release liners each may be one in which one or both surfaces thereof have undergone a surface treatment, e.g., corona treatment.

Other examples of the release liner include: laminated paper in which a film of polyethylene or the like is laminated to high quality paper, glassine paper, kraft paper, or clay-coated paper; coated paper to which a resin such as polyvinyl alcohol or an acrylic ester copolymer is coated; and something in which a fluororesin, silicone resin, or the like as a release agent is applied to, for example, films of synthetic resins such as polyesters and polypropylene.

Preferred of these are release liners made of paper, from the standpoint that such release liners are easy to tear by hand. Especially preferred is a paper release liner in which the base paper has a basis weight of 40 to 120 g/m$^2$ (preferably 50 to 80 g/m$^2$). The thickness of this release liner is preferably 40 to 180 $\mu$m, especially 60 to 140 $\mu$m, more preferably 80 to 120 $\mu$m. In the case where the thickness thereof is too small, there is a tendency that production thereof is difficult due to, for example, the occurrence of wrinkles during winding-up. Too large thicknesses thereof tend to result in a decrease in hand tearability.

In the case where release liners are to be superposed on the pressure-sensitive adhesive layers of the double-sided pressure-sensitive adhesive tape, it is preferable that the release liners which are superposed respectively on the two surfaces should be selected so as to differ in release liner peel force, from the standpoint of improving workability. For example, an improvement in workability is attained in the cases when release liners are selected so that the release liner on the surface of the double-sided pressure-sensitive adhesive tape which is stuck first has a lower peel force than the release liner on the surface which is stuck next.

For applying a pressure-sensitive adhesive composition forming the pressure-sensitive adhesive to any of various sheet-shaped substrates, coating devices in common use may be used. Examples thereof include a knife over roll coater, die coater, roll coater, bar coater, gravure roll coater, reverse-roll coater, dipping, and blade coater.

With respect to drying conditions, it is adopted such conditions that the solvent and residual monomers contained in the pressure-sensitive adhesive are dried and removed during the drying and, in the case where a crosslinker (B) has been used, the functional groups possessed by the base resin can react with the crosslinker (B) to form a crosslinked structure. Preferred drying conditions include, for example, 60°C to 120°C for 1 minute to 5 minutes. After the drying, the pressure-sensitive adhesive layer can be aged in the state of being held between layers of the sheet-shaped substrate, thereby allowing the crosslinking reaction to proceed further.

The double-sided pressure-sensitive adhesive tape of the invention may be in a roll form or in the form of flat sheets, or may have been processed into other various shapes.

In the case of a roll form, it is preferred to dispose a release liner on the surface of only one of the two pressure-sensitive adhesive layers. In the case where the double-sided pressure-sensitive adhesive tape is in the form of flat sheets, it is preferable that a release liner is coated on the surface of each of the two pressure-sensitive adhesive layers.

It is preferable that the double-sided pressure-sensitive adhesive tape of the invention has high tensile strength. The double-sided pressure-sensitive adhesive tape is required to have such a degree of strength that the double-sided pressure-sensitive adhesive tape is not torn when stretched for application to a floor or wall in order to prevent distortion or when peeled off in order to redo the application or when stretched in order to peel off the double-sided pressure-sensitive adhesive tape after use.

It is preferable that the tensile strength of the double-sided pressure-sensitive adhesive tape is preferably 20 N/25mm or higher, more preferably 30 N/25mm or higher, and further more preferably 50 N/25mm or higher. An upper limit of the tensile strength thereof is usually 250 N/25mm.

As described above, the double-sided pressure-sensitive adhesive tape of the invention is preferably used for fixing aircraft parts. Examples of the aircraft parts include carpets, flooring parts, wall parts, resin sheets, resin coatings, or the like.

Especially suitable are carpets, flooring parts, resin sheets, and resin coatings.

Examples of the carpets include known or common carpets for use in aircrafts. Specific examples thereof include carpets employing nylon fibers or olefin fibers.

Examples of the flooring parts include metal alloys such as aluminum alloys and titanium alloys, composite materials configured of reinforcing glass fibers and an epoxy resin, and composite materials configured of reinforcing glass fibers and a phenolic resin.

Examples of the resin sheets include known or common resin sheets for use in aircrafts. Specific examples thereof include resin sheets employing polyvinylidene fluoride.

Examples of the resin coatings include known or common resin coatings for use in aircrafts. Specific examples thereof include resin coatings employing acrylic-styrene-based resins, polycarbonate, and polyurethane.

With respect to combinations of aircraft parts to be bonded to each other using the pressure-sensitive adhesive tape of the invention, the tape is suitable for use in bonding arbitrary combinations of a flooring part, a carpet, a resin sheet, a resin coating, or the like. Examples

The present invention will be explained below in more detail by reference to Examples, but the invention should not be construed as being limited to the following Examples unless the invention departs from the spirit thereof. In the following Production Examples, Examples, and Comparative Examples, "parts" and "%" are on the mass basis.

First, acrylic resins were prepared in the following manner. The weight-average molecular weight, the dispersity and the glass transition temperature of each acrylic resin were measured in accordance with the methods described above. A viscosity measurement was made in accordance with 4.5.3, Rotational Viscometer Method of JIS K5400 (1990).

[Production Example 1]

<Preparation of Acrylic Resins (A-1)>

Into a reactor equipped with a thermometer, stirrer, and reflux condenser were introduced 51 parts of 2-ethylhexyl acrylate, 40 parts of butyl acrylate, 5 parts of vinyl acetate, 3.9 parts of acrylic acid, 0.1 parts of 2-hydroxyethyl methacrylate, 40 parts of ethyl acetate, and 0.18 parts of azobisisobutyronitrile as a polymerization initiator. The contents were heated with stirring and polymerized for 7 hours at the reflux temperature of the ethyl acetate. Thereafter, the reaction mixture was diluted with ethyl acetate to obtain a 50% solution of an acrylic resin (A-1).

The acrylic resin (A-1) obtained had a weight-average molecular weight of 600,000, a dispersity of 5.0, a viscosity of 10,000 mPa·s/25°C, and a glass transition temperature of -59°C.

<Example 1>

To 100 parts, on a solid content, of the acrylic resin (A-1) prepared in Production Example 1 were added 0.008 parts of an epoxy-based crosslinker 1,3-bis(N, N-diglycidylaminomethyl) cyclohexane (trade name "TETRAD C", manufactured by Mitsubishi Gas Chemical Inc.), and an appropriate amount of ethyl acetate and methyl ethyl ketone. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 85 $\mu$m after coating, and dried at 80°C for 5 minutes. Thus, a paper release liner (1-1) coated with a pressure-sensitive adhesive layer (I) was produced.

Next, 5 parts of a melamine resin-coated ammonium polyphosphate (type II) flame retardant (trade name "TERRAJU C-80", manufactured by BUDENHEIM, INC.), 0.012 parts of an epoxy-based crosslinker 1,3-bis(N, N-diglycidylaminomethyl) cyclohexane (trade name "TETRAD C", manufactured by Mitsubishi Gas Chemical Inc.) and an appropriate amount of ethyl acetate and methyl ethyl ketone were added to 100 parts, on a solid content, of the acrylic resin (A-1) prepared in Production Example 1. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 100 $\mu$m after coating, and dried at 80°C for 5 minutes. Thus, a paper release liner (1-2) coated with a pressure-sensitive adhesive layer (II) was produced.

The pressure-sensitive adhesive side of the paper release liner (1-1) coated with the pressure-sensitive adhesive layer (I) was bonded to one side (corona treated) of a substrate in which polyethylene films are laminated on both sides of a polyethylene flat yarn cloth (manufactured by Diatex Co., Ltd.; weight, 47 g/m$^2$; thickness, 62 $\mu$m) as a substrate containing a flat yarn cloth. Subsequently, the pressure-sensitive adhesive side of the paper release liner (1-2) coated with the pressure-sensitive adhesive layer (II) was bonded to the other surface of the substrate.

Thereafter, a thermal aging treatment was conducted for 7 days in a 40°C drying machine. Thus, a double-sided pressure-sensitive adhesive tape was obtained.

<Example 2>

A double-sided pressure-sensitive adhesive tape was obtained in the same manner as in Example 1, except that an applicator was used for coating such that the pressure-sensitive adhesive layer (I) had a thickness of 72 $\mu$m after coating.

<Example 3>

A double-sided pressure-sensitive adhesive tape was obtained in the same manner as in Example 1, except that an applicator was used for coating such that the pressure-sensitive adhesive layer (I) had a thickness of 60 µm after coating.

<Example 4>

5 parts of a melamine resin-coated ammonium polyphosphate (type II) flame retardant (trade name "TERRAJU C-80", manufactured by BUDENHEIM, INC.), 0.008 parts of an epoxy-based crosslinker 1,3-bis(N, N-diglycidylaminomethyl) cyclohexane (trade name "TETRAD C", manufactured by Mitsubishi Gas Chemical Inc.) and an appropriate amount of ethyl acetate and methyl ethyl ketone were added to 100 parts, on a solid content, of the acrylic resin (A-1) prepared in Production Example 1. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 85 µm after coating, and dried at 80°C for 5 minutes. Thus, a paper release liner (3-1) coated with the pressure-sensitive adhesive layer (I) was produced.

Next, 5 parts of a melamine resin-coated ammonium polyphosphate (type II) flame retardant (trade name "TERRAJU C-80", manufactured by BUDENHEIM, INC.), 0.012 parts of an epoxy-based crosslinker 1,3-bis(N, N-diglycidylaminomethyl) cyclohexane (trade name "TETRAD C", manufactured by Mitsubishi Gas Chemical Inc.) and an appropriate amount of ethyl acetate and methyl ethyl ketone were added to 100 parts, on a solid content, of the acrylic resin (A-1) prepared in Production Example 1. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 100 µm after coating, and dried at 80°C for 5 minutes. Thus, a paper release liner (3-2) coated with the pressure-sensitive adhesive layer (II) was produced.

The pressure-sensitive adhesive side of the paper release liner (3-1) coated with the pressure-sensitive adhesive layer (I) was bonded to one side (corona treated) of a substrate in which polyethylene films are laminated on both sides of a polyethylene flat yarn cloth (manufactured by Diatex Co., Ltd.; weight, 47 g/m$^2$; thickness 62 µm) as a substrate containing a flat yarn cloth. Subsequently, the pressure-sensitive adhesive side of the paper release liner (3-2) coated with the pressure-sensitive adhesive layer (II) was bonded to the other surface of the substrate.

Thereafter, a thermal aging treatment was conducted for 7 days in a 40°C drying machine. Thus, a double-sided pressure-sensitive adhesive tape was obtained.

<Example 5>

A double-sided pressure-sensitive adhesive tape was obtained in the same manner as in Example 4, except that an applicator was used for coating such that the pressure-sensitive adhesive layer (I) had a thickness of 72 µm after coating.

<Example 6>

A double-sided pressure-sensitive adhesive tape was obtained in the same manner as in Example 4, except that an applicator was used for coating such that the pressure-sensitive adhesive layer (I) had a thickness of 60 µm after coating.

<Comparative Example 1>

A double-sided pressure-sensitive adhesive tape was obtained in the same manner as in Example 1, except that an applicator was used for coating such that the pressure-sensitive adhesive layer (I) had a thickness of 30 µm after coating.

<Comparative Example 2>

5 parts of a melamine resin-coated ammonium polyphosphate (type II) flame retardant (trade name "TERRAJU C-80", manufactured by BUDENHEIM, INC.), 0.012 parts of an epoxy-based crosslinker 1,3-bis(N, N-diglycidylaminomethyl) cyclohexane (trade name "TETRAD C", manufactured by Mitsubishi Gas Chemical Inc.) and an appropriate amount of ethyl acetate and methyl ethyl ketone were added to 100 parts, on a solid content, of the acrylic resin (A-1) prepared in Production Example 1. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 100 $\mu$m after coating, and dried at 80°C for 5 minutes. Thus, a paper release liner (2-1) coated with the pressure-sensitive adhesive layer (I) was produced.

Next, 5 parts of a melamine resin-coated ammonium polyphosphate (type II) flame retardant (trade name "TERRAJU C-80", manufactured by BUDENHEIM, INC.), 0.012 parts of an epoxy-based crosslinker 1,3-bis(N, N-diglycidylaminomethyl) cyclohexane (trade name "TETRAD C", manufactured by Mitsubishi Gas Chemical Inc.) and an appropriate amount of ethyl acetate and methyl ethyl ketone were added to 100 parts, on a solid content, of the acrylic resin (A-1) prepared in Production Example 1. These ingredients were mixed together until the mixture became even. The resultant composition was applied with an applicator to the light-release surface of a paper release liner (trade name "SLB-50KWD", manufactured by Sumika-kakoushi Co., Ltd.; base-paper basis weight, 53 g/m$^2$) so as to result in a thickness of 100 $\mu$m after coating, and dried at 80°C for 5 minutes. Thus, a paper release liner (2-2) coated with the pressure-sensitive adhesive layer (II) was produced.

The pressure-sensitive adhesive side of the paper release liner (2-1) coated with the pressure-sensitive adhesive layer (I) was bonded to one side (corona treated) of a substrate in which polyethylene films are laminated on both sides of a polyethylene flat yarn cloth (manufactured by Diatex Co., Ltd.; weight, 47 g/m$^2$, thickness, 62 $\mu$m) as a substrate containing a flat yarn cloth. Subsequently, the pressure-sensitive adhesive side of the paper release liner (2-2) coated with the pressure-sensitive adhesive layer (II) was bonded to the other surface of the substrate.

Thereafter, a thermal aging treatment was conducted for 7 days in a 40°C drying machine. Thus, a double-sided pressure-sensitive adhesive tape was obtained.

<Comparative Example 3>

A double-sided pressure-sensitive adhesive tape was obtained in the same manner as in Comparative Example 2, except that an applicator was used for coating such that the pressure-sensitive adhesive layer (I) had a thickness of 120 $\mu$m after coating and an applicator was used for coating such that the pressure-sensitive adhesive layer (II) had a thickness of 120 $\mu$m after coating.

<Comparative Example 4>

A double-sided pressure-sensitive adhesive tape was obtained in the same manner as in Comparative Example 2, except that an applicator was used for coating such that the pressure-sensitive adhesive layer (I) had a thickness of 85 $\mu$m after coating and an applicator was used for coating such that the pressure-sensitive adhesive layer (II) had a thickness of 85 $\mu$m after coating.

<Comparative Example 5>

A double-sided pressure-sensitive adhesive tape was obtained in the same manner as in Comparative Example 2, except that a melamine resin-coated ammonium polyphosphate (type II) flame retardant (trade name "TERRAJU C-80", manufactured by BUDENHEIM, INC.) was not added to the pressure-sensitive adhesive layer (II).

<Comparative Example 6>

A double-sided pressure-sensitive adhesive tape was obtained in the same manner as in Comparative Example 2, except that the addition amount of a melamine resin-coated ammonium polyphosphate (type II) flame retardant (trade name "TERRAJU C-80", manufactured by BUDENHEIM, INC.) to the pressure-sensitive adhesive layer (I) was changed to 20 parts and the addition amount of a melamine resin-coated ammonium polyphosphate (type II) flame retardant (trade name "TERRAJU C-80", manufactured by BUDENHEIM, INC.) to the pressure-sensitive adhesive layer (II) was changed to 20 parts.

The double-sided pressure-sensitive adhesive tapes thus obtained were examined and evaluated for the adhesive strength (I) to SUS-BA plate, the adhesive strength (I) to Carpet and the flame retardance (FAR 25) by the method described below. The results are shown in Table 1 and Table 2 which will be given later.

[Pressure-sensitive Adhesive Strength (I) to SUS-BA Plate]

The back surface (the pressure-sensitive adhesive layer (II)) of the pressure-sensitive adhesive layer (I) of each double-sided pressure-sensitive adhesive tape which was to be examined for pressure-sensitive adhesive strength was peeled off the release liner in contact with the pressure-sensitive adhesive layer (II) and lined with a polyethylene terephthalate film having a thickness of 25 μm ("Lumirror S10", manufactured by Toray Industries, Inc.), and this laminate was cut into a size of 25 mm (width) × 150 mm (length) to obtain a test piece.

Next, a corona treated surface of a polyethylene terephthalate film cut into a width of 25 mm and a length of 180 mm (trade name "Lumirror S10", manufactured by Toray Industries, Inc.; thickness, 38 μm) was bonded to the pressure-sensitive adhesive layer at one end of the test piece so as to overlap about 3 cm, and the overlapping surface was fixed by a stapler.

Subsequently, a test plate of SUS-BA plate (bright annealing treated stainless steel plate) which had been subjected to thermal and drying treatment at 175°C for 1hour was used as an adherend, and the pressure-sensitive adhesive layer (I) from which the release liner of this test piece was peeled off was press-bonded to this test plate in a thermo-hygrostat adjusted to 23 ± 2°C and 50 ± 5% RH by rolling a roller with a weight of 2 kg forward and backward twice thereon at a crimp speed of 10 mm/s.

After the crimp, the resultant piece was allowed to stand in the thermo-hygrostat adjusted to 23 ± 2°C and 50 ± 5% RH for 5 minutes or 3 days. The free portion of the test piece was folded back at 90° and peeled off over 10 mm. Thereafter, the test plate was fixed to the bottom of the tensile tester (AG-X+, manufactured by Shimadzu Corporation) and the end of the test piece was fixed to the upper chuck, and the double-sided pressure-sensitive adhesive tape was peeled from the adherend in a direction of 90° at a speed of 100 mm/min to measure the pressure-sensitive adhesive strength. The pressure-sensitive adhesive properties was evaluated based on the following criteria.

(Evaluation Criteria)

o: The pressure-sensitive adhesive strength after bonding for 5 minutes was 25 N/25mm or more and the pressure-sensitive adhesive strength after bonding for 3 days was 30 N/25mm or more.

Δ: The pressure-sensitive adhesive strength after bonding for 5 minutes was 15 N/25mm or more and less than 25 N/25mm and the pressure-sensitive adhesive strength after bonding for 3 days was 30 N/25 mm or more.

×: The pressure-sensitive adhesive strength after bonding for 5 minutes was less than 15 N/25mm or the pressure-sensitive adhesive strength after bonding for 3 days was less than 30 N/25mm.

[Pressure-sensitive Adhesive Strength (I) to Carpet Plate]

The back surface (the pressure-sensitive adhesive layer (II)) of the pressure-sensitive adhesive layer (I) of each double-sided pressure-sensitive adhesive tape which was to be examined for pressure-sensitive adhesive strength was peeled off the release liner in contact with the pressure-sensitive adhesive layer (II) and lined with a polyethylene terephthalate film having a thickness of 25 μm ("Lumirror S10", manufactured by Toray Industries, Inc.), and this laminate was cut into a size of 25 mm (width) × 150 mm (length) to obtain a test piece.

Next, a corona treated surface of a polyethylene terephthalate film cut into a width of 25 mm and a length of 180 mm (trade name "Lumirror S10", manufactured by Toray Industries, Inc.; thickness, 38 μm) was bonded to the pressure-sensitive adhesive layer at one end of the test piece so as to overlap about 3 cm, and the overlapping surface was fixed by a stapler.

Subsequently, Carpet (manufactured by Lantal; for AIRCRAFT; material: Wool/Polyamide) was used as an adherend, and the pressure-sensitive adhesive layer (I) from which the release liner of this test piece was peeled off was press-bonded to the back surface (black surface) of the Carpet in a thermo-hygrostat adjusted to 23 ± 2°C and 50 ± 5% RH by rolling a roller with a weight of 2 kg forward and backward twice thereon at a crimp speed of 10 mm/s.

After the crimp, the resultant piece was allowed to stand in the thermo-hygrostat adjusted to 23 ± 2°C and 50 ± 5% RH for 3 days. The free portion of the test piece was folded back at 90° and peeled off over 10 mm. Thereafter, the Carpet was fixed to the bottom of the tensile tester (AG-X+, manufactured by Shimadzu Corporation) and the end of the test piece was fixed to the upper chuck, and the double-sided pressure-sensitive adhesive tape was peeled from the adherend in a direction of 90° at a speed of 100 mm/min to measure the pressure-sensitive adhesive strength. The pressure-sensitive adhesive properties was evaluated based on the following criteria.

(Evaluation Criteria)

○: The pressure-sensitive adhesive strength after bonding for 3 days was 3 N/25mm or more.

×: The pressure-sensitive adhesive strength after bonding for 3 days was less than 3 N/25mm.

[Flame retardance (FAR 25)]

A test in accordance with the flammability test as provided for in 14CFR Part 25 Appendix F Part I Section (a) (1)(ii) was conducted using the obtained double-sided pressure-sensitive adhesive tapes above to assess whether the double-sided pressure-sensitive adhesive tapes are pass or rejection.

In the following table, the case of pass is indicated as "o" and the case of rejection is indicated as "x".

[Table 1]

| | | | Example 1 | Example 2 | Example 3 | Example 4 | Example 5 | Example 6 |
|---|---|---|---|---|---|---|---|---|
| Thickness of pressure-sensitive adhesive layer (II)/ thickness of pressure-sensitive adhesive layer (I) | | | 1.18 | 1.39 | 1.67 | 1.18 | 1.39 | 1.67 |
| Composition | Pressure-sensitive adhesive layer (I) | Acrylic resin Compound proportion | A-1 100 | | | | | |
| | | Flame retardant Compound proportion | NA 0 | NA 0 | NA 0 | C-80 5 | C-80 5 | C-80 5 |
| | | Crosslinker Compound proportion | Tetrad-C 0.008 | | | | | |
| | | Thickness (μm) | 85 | 72 | 60 | 85 | 72 | 60 |
| | Pressure-sensitive adhesive layer (II) | Acrylic resin Compound proportion | A-1 100 | | | | | |
| | | Flame retardant Compound proportion | C-80 5 | | | | | |
| | | Cross linker Compound proportion | Tetrad-C 0.012 | | | | | |
| | | Thickness (μm) | 100 | | | | | |
| Substrate | Material Weight (g/m$^2$) Thickness (μm) | | Substrate containing flat yarn cloth 47 62 | | | | | |
| Property | Flame retardance (FAR 25) | | ○ | ○ | ○ | ○ | ○ | ○ |
| | Pressure-sensitive adhesive strength (I) to SUS-BA plate (N/25mm) | Evaluation of pressure-sensitive adhesive properties | ○ | ○ | ○ | Δ | Δ | Δ |
| | | After bonding for 5 minutes | 59 | 36 | 27 | 24 | 20 | 16 |
| | | After bonding for 3 days | 60 | 52 | 32 | 56 | 51 | 32 |
| | Pressure-sensitive adhesive strength (I) to Carpet (N/25mm) | Evaluation of pressure-sensitive adhesive properties | ○ | ○ | ○ | ○ | ○ | ○ |
| | | After bonding for 3 days | 9.8 | 7 | 4.1 | 8.1 | 6 | 3.9 |

EP 3 561 011 A1

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Thickness of pressure-sensitive adhesive layer (II)/ thickness of pressure-sensitive adhesive layer (1) | | | 3.33 | 1.00 | 1.00 | 1.00 | 1.00 | 1.00 |
| Composition | Pressure-sensitive adhesive layer (I) | Acrylic resin Compound proportion | A-1 100 | | | | | |
| | | Flame retardant Compound proportion | NA 0 | C-80 5 | C-80 5 | C-80 5 | C-80 5 | C-80 20 |
| | | Crosslinker Compound proportion | Tetrad-C 0.008 | Tetrad-C 0.012 | Tetrad-C 0.012 | Tetrad-C 0.012 | Tetrad-C 0.012 | Tetrad-C 0.012 |
| | | Thickness ($\mu$m) | 30 | 100 | 120 | 85 | 100 | 100 |
| | Pressure-sensitive adhesive layer (II) | Acrylic resin Compound proportion | A-1 100 | | | | | |
| | | Flame retardant Compound proportion | C-80 5 | C-80 5 | C-80 5 | C-80 5 | NA 0 | C-80 20 |
| | | Crosslinker Compound proportion | Tetrad-C 0.012 | | | | | |
| | | Thickness ($\mu$m) | 100 | 100 | 120 | 85 | 100 | 100 |
| Substrate | Material Weight (g/m$^2$) Thickness ($\mu$m) | | Substrate containing flat yarn cloth 47 62 | | | | | |

| | | | Comparative Example 1 | Comparative Example 2 | Comparative Example 3 | Comparative Example 4 | Comparative Example 5 | Comparative Example 6 |
|---|---|---|---|---|---|---|---|---|
| Property | | Flame retardance (FAR 25) | ○ | × | × | × | × | × |
| | Pressure-sensitive adhesive strength (I) to SUS-BA plate (N/25mm) | Evaluation of pressure-sensitive adhesive properties | × | ○ | ○ | Δ | ○ | Δ |
| | | After bonding for 5 minutes | 11 | 27 | 34 | 23 | 27 | 18 |
| | | After bonding for 3 days | 15 | 56 | 55 | 51 | 56 | 64 |
| | Pressure-sensitive adhesive strength (I) to Carpet (N/25mm) | Evaluation of pressure-sensitive adhesive properties | × | ○ | ○ | ○ | ○ | ○ |
| | | After bonding for 3 days | 2.3 | 14 | 17 | 8.6 | 14 | 9.2 |

[Comprehensive Evaluation of Flame Retardance (FAR 25)]

Using the double-sided pressure-sensitive adhesive tape obtained above, tests were conducted using a vertical method flammability tester (VFT-200, manufactured by Daiei Kagaku Seiki MFG. Co., Ltd.), and evaluation was made based on the following criteria. The results are shown in Table 3 which will be given later.

The test piece had a length of 30 cm (12 inches) and a width of 7.5 cm (3 inches), the flame size was about 38 mm (1.5 inch), and the distance between the test piece and the burner was about 20 mm (3/4 inch) and the flame contact time was 12 seconds.

(Evaluation Criteria)

○: The test was conducted twice and the average value satisfied all the following conditions.

×: The test was conducted twice and the average value did not meet one or more of the following conditions.
(Combustion time) The flame of the test piece was extinguished within 15 seconds after the flame-out.
(Combustion length) The test piece had a loss length of 200 mm (8 inches) or less, and the test piece was not burned out in all the tests conducted twice.
(Existence of dripping) Drip (cinders dropped from the test piece) was extinguished within 5 seconds.

[Table 3]

| | Flame retardance (FAR 25) | Combustion time (second) | | | Combustion length (cm) | | | Existence of dripping (drip) | |
|---|---|---|---|---|---|---|---|---|---|
| | Comprehensive Evaluation | 1 | 2 | Average value | 1 | 2 | Average value | 1 | 2 |
| Example 1 | ○ | 0 | 4 | 2 | 17 | 18 | 17.5 | | |
| Example 2 | ○ | 0 | 9 | 4.5 | 15 | 18 | 16.5 | | |
| Example 3 | ○ | 0 | 0 | 0 | 16 | 18 | 17 | | |
| Example 4 | ○ | 0 | 0 | 0 | 15 | 16 | 15.5 | | |
| Example 5 | ○ | 6.8 | 0 | 3.4 | 21 | 19 | 20 | | |
| Example 6 | ○ | 0 | 0 | 0 | 13.6 | 14.8 | 14.2 | | |
| Comparative Example 1 | ○ | 0 | 0 | 0 | 17 | 15 | 16 | NA | |
| Comparative Example 2 | × | 58 | 18 | 38 | All | 28 | - | | |
| Comparative Example 3 | × | 45 | 53 | 49 | All | All | - | | |
| Comparative Example 4 | × | 40 | 45 | 42.5 | All | All | - | | |
| Comparative Example 5 | × | 50 | 22 | 36 | All | All | - | | |
| Comparative Example 6 | × | 32 | 38 | 35 | All | All | - | | |

It can be seen from the results of the evaluation that the double-sided pressure-sensitive adhesive tapes of Examples in which the proportion (Y/X) of the thickness (X) of the pressure-sensitive adhesive layer (I) and the thickness (Y) of the pressure-sensitive adhesive layer (II) was more than 1.00 and less than 2.00 passed the flammability test described in 14 CFR Part 25 Appendix F Part I Section (a) (1)(ii), and the pressure-sensitive adhesive strength (I) to SUS-BA plate and the pressure-sensitive adhesive strength (I) to Carpet were good.

On the other hand, although the double-sided pressure-sensitive adhesive tape of Comparative Example 1 in which the proportion (Y/X) of the thickness (X) of the pressure-sensitive adhesive layer (I) and the thickness (Y) of the pressure-sensitive adhesive layer (II) was 2.00 or more passed the flammability test described in 14 CFR Part 25 Appendix F Part I Section (a) (1)(ii), the pressure-sensitive adhesive properties of the pressure-sensitive adhesive layer (I) were lowered, for example, the pressure-sensitive adhesive strength (I) to the SUS-BA plate after bonding for 5 minutes was less than 25 N/25mm, the pressure-sensitive adhesive strength (I) to the SUS-BA plate after bonding for 3 days was less than 30 N/25mm, and the pressure-sensitive adhesive strength (I) to Carpet after bonding for 3 days was less than 3 N/25mm.

The double-sided pressure-sensitive adhesive tapes of Comparative Examples 2 to 6 in which the thickness proportion (Y/X) of the thickness (Y) of the pressure-sensitive adhesive layer (II) to the thickness (X) of the pressure-sensitive adhesive layer (I) was 1.00, that is, the thickness of the pressure-sensitive adhesive layer (I) and the thickness of the pressure-sensitive adhesive layer (II) were the same, did not pass the flammability test described in 14 CFR Part 25 Appendix F Part I Section (a) (1)(ii), regardless of the thickness of the pressure-sensitive adhesive layer, the presence or absence of the flame retardant, and the amount of flame retardant.

It can be seen from the results of the evaluation that the double-sided pressure-sensitive adhesive tapes in which the proportion (Y/X) of the thickness (X) of the pressure-sensitive adhesive layer (I) and the thickness (Y) of the pressure-sensitive adhesive layer (II) is more than 1.00 and less than 2.00 passed the flammability test described in 14 CFR Part 25 Appendix F Part I Section (a) (1)(ii), in addition, it can be seen that a flame retardant tape having strong double-sided pressure-sensitive adhesive properties was obtained which had good pressure-sensitive adhesive strength to the SUS-BA plate and good pressure-sensitive adhesive strength to Carpet.

Although the invention has been described in detail with reference to specific embodiments, it will be apparent to those skilled in the art that various changes and modifications can be made without departing from the spirit and scope of the invention. This application is based on Japanese Patent Application (Japanese Patent Application No. 2016-249966) filed on December 22, 2016, the contents of which are incorporated herein by reference.

Industrial Applicability

The double-sided pressure-sensitive adhesive tape of the invention is excellent in good balance of both flame retardance and pressure-sensitive adhesive properties and can be suitably used for use in fixing aircraft parts, fixing of mirrors or guide signs, or the like.

**Claims**

1.    A double-sided pressure-sensitive adhesive tape, comprising a layer structure of a pressure-sensitive adhesive layer (I), a substrate, and a pressure-sensitive adhesive layer (II) in this order,
wherein a proportion (Y/X) of a thickness (X) of the pressure-sensitive adhesive layer (I) and a thickness (Y) of the pressure-sensitive adhesive layer (II) is more than 1.00 and less than 2.00.

2.    The double-sided pressure-sensitive adhesive tape according to claim 1,
wherein the pressure-sensitive adhesive layer (I) and the pressure-sensitive adhesive layer (II) are constituted of a pressure-sensitive adhesive composition containing an acrylic resin (A).

3.    The double-sided pressure-sensitive adhesive tape according to claim 2,
wherein the pressure-sensitive adhesive composition further contains a crosslinker (B).

4.    The double-sided pressure-sensitive adhesive tape according to any one of claims 1 to 3,
wherein at least one of the pressure-sensitive adhesive layer (I) and the pressure-sensitive adhesive layer (II) contains a flame retardant (C).

5.    The double-sided pressure-sensitive adhesive tape according to claim 4,
wherein 90% or more of a total mass of the flame retardant (C) is contained in the pressure-sensitive adhesive layer (II).

6.    The double-sided pressure-sensitive adhesive tape according to claim 4 or claim 5,
wherein the flame retardant (C) is contained only in the pressure-sensitive adhesive layer (II).

7.    The double-sided pressure-sensitive adhesive tape according to any one of claims 4 to 6,

wherein the flame retardant (C) is a halogen-free flame retardant.

8.  The double-sided pressure-sensitive adhesive tape according to any one of claims 1 to 7,
    wherein the substrate is a substrate containing a flat yarn cloth.

9.  The double-sided pressure-sensitive adhesive tape according to any one of claims 1 to 8, which is used for fixing
    aircraft parts.

## INTERNATIONAL SEARCH REPORT

| | International application No. |
|---|---|
| | PCT/JP 2017/046235 |

A. CLASSIFICATION OF SUBJECT MATTER
Int.Cl. C09J7/20(2018.01)i, B32B27/00(2006.01)i, B32B27/18(2006.01)i,
B32B27/30(2006.01)i, B64D11/00(2006.01)i, C09J11/02(2006.01)i,
C09J133/00(2006.01)i, C09J201/00(2006.01)i
According to International Patent Classification (IPC) or to both national classification and IPC

B. FIELDS SEARCHED

Minimum documentation searched (classification system followed by classification symbols)
Int.Cl. C09J1/00-201/10, B64C1/00, B64D11/00

Documentation searched other than minimum documentation to the extent that such documents are included in the fields searched
Published examined utility model applications of Japan        1922-1996
Published unexamined utility model applications of Japan      1971-2018
Registered utility model specifications of Japan              1996-2018
Published registered utility model applications of Japan      1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-120774 A (DAINIPPON INK AND CHEMICALS) 02 July 2015, claims, paragraphs [0002], [0134], examples 5, 8-10 (Family: none) | 1-9 |
| X | JP 2015-98554 A (DAINIPPON INK AND CHEMICALS) 28 May 2015, claims, paragraphs [0098], [0123], examples 1-4, 9-17 (Family: none) | 1-9 |
| X | JP 2013-213123 A (DEXERIALS CORP.) 17 October 2013, claims, paragraphs [0022], examples (Family: none) | 1-9 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 January 2018 | 06 February 2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP 2017/046235 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | WO 2008/149920 A1 (KANEKA CORPORATION)  11 December 2008, double-sided tapes 5, 6 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004217833 A
- JP 2016249966 A